# EUROPEAN PATENT SPECIFICATION

(11) **EP 1 475 878 B1**
(45) Date of publication and mention of the grant of the patent: **03.05.2006**
(21) Application number: 03257975.7
(22) Date of filing: 17.12.2003
(51) Int. Cl.: H02J 9/00, A21B 7/00, A47J 37/00, A47J 43/00

(54) **Bread maker and control method thereof**
Brotbackmaschine und Steuerverfahren dafür
Machine de fabrication de pain et procédé de commande associé

(30) Priority: 07.05.2003 KR 2003029064
(43) Date of publication of application: 10.11.2004
(73) Proprietor: SAMSUNG ELECTRONICS CO., LTD., Suwon-City, Kyungki-do (KR)
(72) Inventor: Sung, Han-jun, Paldal-ku, Suwon city, Kyungki-do (KR); Kwon, Yong-hyun, Suwon city Kyungki-do (KR); Kim, Chul, Anyang-city Kyungki-do (KR); Lee, Tae-uk, Suwon city Kyungki-do (KR); Park, Jae-ryong, Paldal-ku, Suwon city, Kyungki-do (KR); Lee, Jang-woo, Suwon city Kyungki-do (KR); Lim, Dong-bin, Paldal-ku, Suwon city Kyungki-do (KR)
(74) Representative: Brandon, Paul Laurence

(56) References cited:
- DE-A- 19 600 851
- US-A- 4 803 086
- US-A- 5 947 009
- US-A- 6 057 609

## Description

The present invention relates to bread makers for automatically making bread and control methods thereof.

Generally, making bread is so complicated that it is difficult for average persons to make good bread at home by hand. This is because the process of making bread includes multiple steps of mixing ingredients such as flour, sugar, yeast, etc., to form a dough; kneading the dough; leavening the dough; baking the dough; and so on.

Therefore, various bread makers have been developed to allow a user to easily make bread by automatically performing the foregoing multiple steps to provide finished bread to the user.

For example, a bread maker disclosed in Korean Patent Publication No. 1991-10203 includes a pair of parallel kneading drums at upper and lower parts of an oven compartment that reverse rotary direction periodically, a baking tray between the pair of kneading drums, heaters to heat the inside of the oven compartment, a bar code scanner, etc.

In the bread maker according to Korean Patent Publication No. 1991-10203, upper and lower ends of a mixing bag filled with flour, water, etc., are attached to the upper and lower kneading drums, and then the mixing bag is reciprocated up and down for a predetermined time, thereby kneading the dough in the mixing bag.

Document US-4803086 discloses the preamble of claim 1.

After completing the kneading of the dough, the mixing bag is automatically separated from the upper kneading drum, and is completely wound on the lower kneading drum, with the dough being squeezed out of the mixing bag into the baking tray. Thereafter, the heaters heat the inside of the oven compartment, thereby leavening and baking the dough for a predetermined time.

The process of making the bread depends on reading a bar code that is printed on the mixing bag. The bar code contains information on kneading time, leavening time, baking time, etc., according to a specific recipe. The bar code is read by a bar code scanner and the read data are transmitted to a controller that controls the kneading drums, the heaters, etc., on the basis of the read data.

However, power supplied to the bread maker may be abruptly cut off owing to a user's carelessness or interruption of electric power.

In this case, a conventional bread maker continues the interrupted bread-making process if power supply to the bread maker is resumed after the interruption of the electric power, or ends the bread making process at the same time when the interruption of the electric power happens.

According to the conventional bread maker which continues the bread making process if power supply to the bread maker is resumed after the interruption of the electric power, when power supply is resumed after the power-interruption time excessively passes, bread having a desired quality may not be made since an internal temperature of the conventional bread maker is not sufficiently controlled.

However, according to the conventional bread maker, which ends the bread making process at the same time when the interruption of the electric power happens, even when it is all right to continue the bread making process, because the power-interruption time is short, the bread making process is ended. Thus, a user has to do it all over again.

An aspect of the present invention provides a bread maker and a control method thereof, in which when power supply is resumed after the power-interruption time excessively passes, bread-making process is ended and a mixing bag is easily removed, and if not, the making-bread process is continuously proceeded.

According to an aspect of the present invention, a bread maker to perform a bread making process, comprises a main body forming an oven compartment; upper and lower kneading drums spaced apart from each other inside the oven compartment, each kneading drum having a holding part for holding opposite ends of a mixing bag filled with dough; a drum driving part rotating the kneading drums in clockwise and counterclockwise directions to knead the dough contained in the mixing bag; an auxiliary power supply to supply power when power supply of a primary power supply is cut off; and a controller which receives power from the auxiliary power supply, and is suitable to measure a time interval from interruption to resumption of the power supply, determine whether the measured time exceeds a predetermined limit of power-interruption time, and end the bread making process when the measured time exceeds the predetermined limit of power-interruption time.

Suitably, the controller controls the drum driving part to be rotated so that the mixing bag is removed from the holding part of the lower kneading drum on the basis of the rotation position detected by the rotation sensing part when the measured time exceeds the predetermined limit of power-interruption time.

Suitably, the controller controls rotation times of the kneading drums on the basis of the rotation position sensed by the rotation sensing part.

Suitably, the controller controls the drum driving part so that the upper kneading drum is rotated opposite to a wound direction of the mixing bag on the upper kneading drum after the mixing bag is removed from the lower kneading drum.

Suitably, the controller controls the rotation times of the kneading drums so that the upper kneading drum is rotated to a position in which the mixing bag was first held.

Suitably, the bread maker further comprises a displayer, which displays that the bread-making process is ended because the measured time exceeds the predetermined limit of the power-interruption time.

Suitably, the controller controls an interrupted bread making process to be continued when the measured time is within the predetermined limit of the power-interruption time.

According to another aspect of the present invention, there is provided a method of controlling a bread maker, during a bread making process having an oven compartment, a pair of kneading drums spaced apart from each other inside the oven compartment with each kneading drum having a holding part holding opposite ends of a mixing bag filled with dough, and a drum driving part rotating the kneading drums to knead the dough contained in the mixing bag, comprises: detecting a rotation position of the kneading drum; determining whether a measured time exceeds a predetermined limit of power-interruption time by measuring a time from the interruption of power supply to resumption of the power supply; ending a bread making process when the measured time exceeds the predetermined limit of power-interruption time; and rotating the kneading drums on the basis of the detected rotation positions of the kneading drum.

Further features of the present invention are set out in the appended claims.

The present invention will become apparent and more readily appreciated from the following description of the embodiments, by way of example only, taken in conjunction with the accompany drawings, of which:
FIG. 1 is a perspective view of a bread maker according to an embodiment of the present invention;
FIG. 2 is a cut-away perspective view of an electric component compartment of the bread maker in FIG. 1;
FIG. 3 is a control block diagram of the bread maker in FIG. 1; and
FIG. 4 is a control flowchart of the bread maker according to another embodiment of the present invention; and

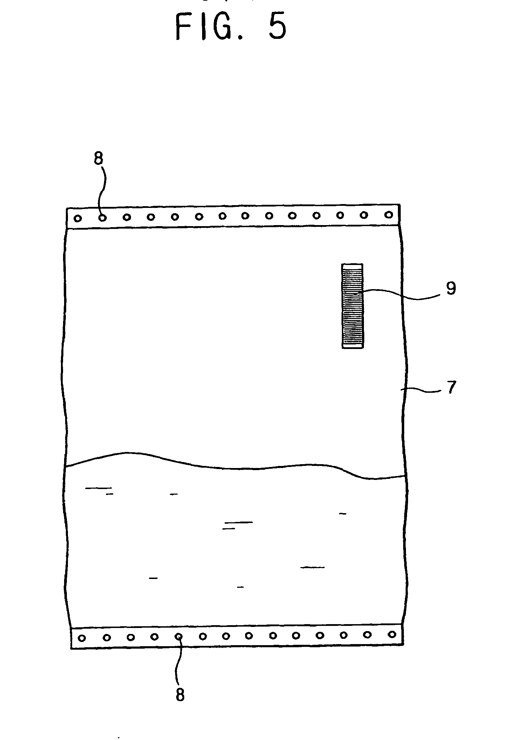

FIG. 5 is a view of a mixing bag.

Reference will now be made in detail to the present preferred embodiments of the present invention, examples of which are illustrated in the accompanying drawings, wherein like reference numerals refer to the like elements throughout. The embodiments are described below in order to explain the present invention by referring to the figures.

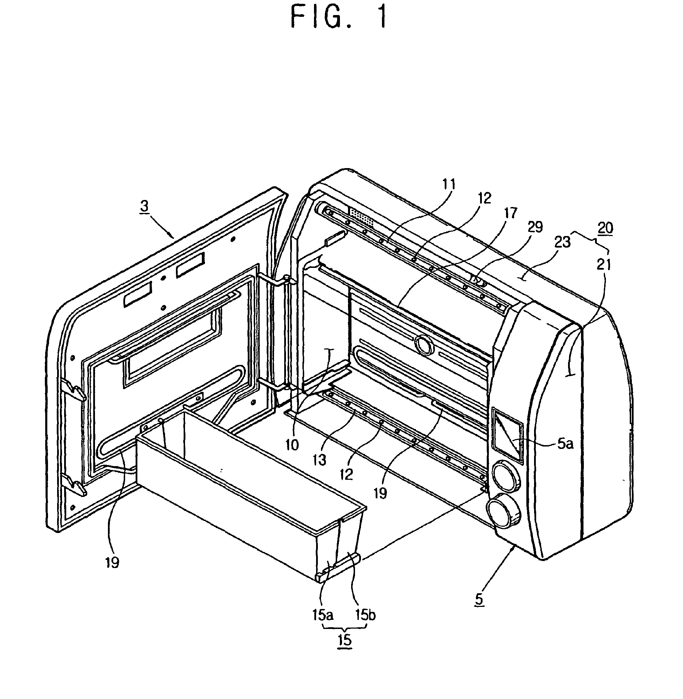

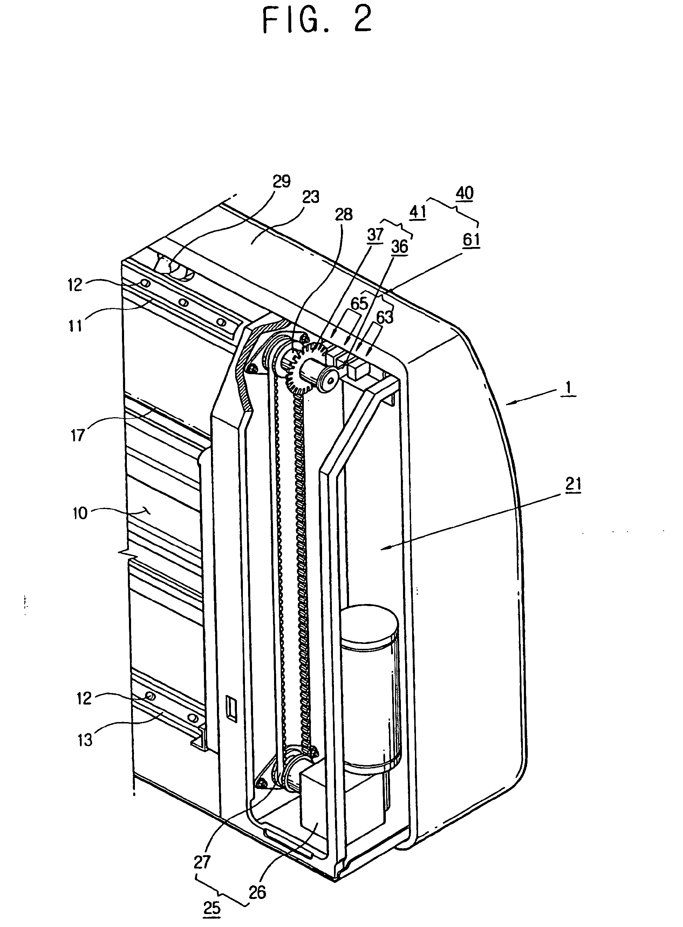

FIG. 1 is a perspective view of a bread maker according to an embodiment of the present invention, and FIG. 2 is a cut-away perspective view of an electric component compartment of the bread maker in FIG. 1. As shown in FIGS. 1 and 2, the bread maker according to an embodiment of the present invention includes a main body 1 divided into an oven compartment 10 and an electric component compartment 20, a door 3 in the front of the main body 1 to open and close a front opening of the oven compartment 10, and a control panel 5 in the front of the main body 1 to allow a user to control the bread maker and to know the status of the bread maker.

In the control panel 5, a displayer 5a is provided, which displays how far bread making process is progressed, for example, kneading and kneading time, baking and baking time, completion of the making bread, and so on, by using pictures and letters.

The displayer 5a displays information visually, and may also notify the information auditorily, for example, by using a recoded sound, or a buzzer.

Inside the oven compartment 10, upper and lower kneading drums 11 and 13 are provided in parallel and reciprocally rotate, onto which opposite ends of a mixing bag 7 filled with raw materials (ingredients) to make bread are attached and wound via winding holes 5. In a lower part of the oven compartment 10, a baking tray 15, which contains the dough to be used in a baking process, is provided between the upper and lower kneading drums 11 and 13.

Each kneading drum 11, 13 has a holding part 12 holding opposite ends of the mixing bag 7.

The baking tray 15 includes first and second trays 15a and 15b having "L"-shaped cross sections symmetrical to one another. The first and second trays 15a and 15b combine to form a box having a top opening. In an upper part of the oven compartment 10, a pair of squeezing members 17 between the upper kneading drum 11 and the baking tray 15 prevents the dough kneaded in the mixing bag 7 from moving beyond the baking tray 15 toward the upper kneading drum 11.

At upper and lower parts of the inside walls of the oven compartment 10 and the door 3, heaters 19 to heat the inside of the oven compartment 10 are provided.

The electric component compartment 20 includes a first component compartment 21 beside the oven compartment 10 and a second component compartment 23 behind the oven compartment 10. A drum driving part 25 to rotate the upper and lower kneading drums 11 and 13 in clockwise and counterclockwise directions is included inside the first component compartment 21. A bar code scanner 29 that reads a bar code 9 printed on, or applied to, the mixing bag 7, which is wound on the upper and lower kneading drums 11 and 13 is included inside the second component compartment 23.

The drum driving part 25 includes a motor 26 rotating the lower kneading drum 13, and a belt 27 transmitting a rotary movement of the lower kneading drum 13 to a rotation shaft 28 of the upper kneading drum 11. The bar code scanner 29 is able to move near to, and distantly from, an outer circumference of the upper kneading drum 11.

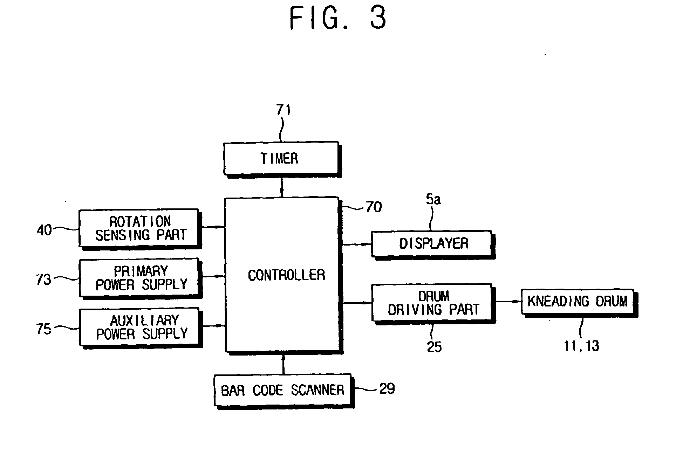

The bread maker according to an embodiment of the present invention comprises a rotation sensing part 40 detecting one or more rotation positions of at least one of a pair of kneading drums 11 and 13, a timer 71 (see FIG. 3) measuring a time interval, and a controller 70 (to be described later). The controller 70 controls the drum driving part 25 so that the mixing bag is removed from the lower kneading drums 13 on the basis of rotation position signals of the pair of kneading drums 11 and 13 detected by the rotation sensing part 40 and ends the bread making process when the progress time measured through the timer 71 exceeds a predetermined limit of power-interruption time.

The rotation sensing part 40 includes a disk part 41 attached to the rotation shaft 28 of the upper kneading drum 11, and a rotation sensor 61 placed near the disk part 41, which outputs a pulse signal by sensing the rotation of the disk part 41.

The disk part 41 includes a first disk 36 that allows the rotation sensor 61 to sense one revolution of the upper kneading drum 11, and a second disk 37 that allows the rotation sensor 61 to sense a rotation less than one revolution of the upper kneading drum 11.

The first and second disks 36 and 37 each have a circular shape, in which the first disk 36 has one detecting projection and the second disk 37 has twenty four detecting projections, respectively.

It is understood that the rotation sensor may include a single disk having a set of projections that indicate partial rotations of the kneading drum and a single projection that indicates a full rotation of the kneading drum.

The rotation sensor 61 includes a first disk sensor 63 sensing the projection of the first disk 36 and outputting one pulse signal per revolution of the upper kneading drum 11. The rotation sensor 61 also includes a second disk sensor 65 sensing the twenty-four projections of the second disk 37 and outputting twenty-four pulse signals per revolution of the upper kneading drum 11. That is, when the upper kneading drum 11 makes one revolution, the first and second disk sensors 63 and 65 output one and twenty-four pulse signals, respectively.

The pulse signals outputted from the first and second disk sensor 63 and 65 of the rotation sensor 61 are transmitted to the controller 70. The controller 70 detects the rotation position of the upper kneading drum 11 on the basis of the pulse signal outputted therefrom and controls the motor 26 of the drum driving part 25 rotating the upper and lower kneading drums 11 and 13 during kneading, to thereby accurately control a distance between upper and lower positions of the mixing bag.

For example, the controller 70 rotates the motor 26 clockwise to move the mixing bag 7 upwards until the controller 70 receives the pulse signal detected by the second disk sensor 65 ten times, the controller 70 receives the pulse signal detected by the first disk sensor 63 three times, and the controller 70 receives the pulse signal detected by the second disk sensor 65 ten times. The controller 70 then rotates the motor 26 counterclockwise to move the mixing bag 7 downwards until the controller 70 receives the pulse signal detected by the second disk sensor 65 ten times, the controller 70 receives the pulse signal detected by the first disk sensor 63 three times, and the controller 70 receives the pulse signal detected by the second disk sensor 65 ten times. In such a period, the controller 70 rotates the motor 26 clockwise and counterclockwise during a predetermined time set up in a bar code to move the mixing bag 7 upwards and downwards, thereby controlling raw materials (ingredients) in the mixing bag to be kneaded.

FIG. 3 is a block diagram of the bread maker in FIG. 1 according to an embodiment of the present invention. As shown in FIG. 3, the bread maker, according to an embodiment of the present invention, comprises a rotation sensing part 40 detecting one or more rotation positions of at least one of a pair of kneading drums 11 and 13, the timer 71 measuring the time interval, the controller 70 and the displayer 5a displaying the finishing of bread making. The controller 70 determines whether the time measured by the timer 71 exceeds a predetermined limit of power-interruption time, and ends the bread making process and controls the rotation positions of the pair of kneading drums 11 and 13 on the basis of the rotation positions thereof, detected by the rotation sensing part 40, when the progress time measured by the timer 71 exceeds a predetermined limit of power-interruption time.

The timer 71, according to this embodiment of the present invention, receives power from an auxiliary power supply 75, which supplies power to the controller 70 and the timer 71, and measures progress time during the power-interruption, when power supply is cut off from a primary power supply 73 owing to the power interruption. Until the power-interruption ends and power is supplied from the primary power supply 73 again, the timer 71 continuously measures the progress time. The measured time is stored in a memory, which is one part of the controller 70.

The controller 70 determines whether the measured time until power is supplied again after the power-interruption exceeds a predetermined limit of the power-interruption time previously stored in the memory of the controller 70. Herein, the predetermined limit of the power-interruption time refers to a time limit in which the qualities of completely made bread or cleanness of the bread maker are not adversely affected before the temporarily interrupted bread making process, owing to a situation in which primary power is cut-off, is completed. In an embodiment of the invention, about 15 minutes is set up as the predetermined limit of the power interruption, but alternate embodiments may require that the predetermined limit of the power interruption be longer or shorter.

Also, the controller 70 continues the temporarily interrupted bread making process when the measured time is determined to be within the predetermined limit of the power interruption. If the bread making process is set up as a reservation stand-by, a reserved bread making process proceeds without respect to whether the primary power supply is temporarily cut off once it becomes time to do reserved process.

When the measured time is determined to exceed the predetermined limit of the power interruption, the controller 70 ends the bread-making process and displays that the bread-making process is ended owing to power cut-off over the predetermined limit of the power-interruption time through the displayer 5a. The displayer 5a, which is illustrated as an LCD panel (refer to FIG. 1), may inform a user of the end of the bread making by using a buzzer or a recorded sound.

The power, which is supplied from the auxiliary power supply 75 owing to the power cut-off of the primary power supply 73, is supplied to a microprocessor (not shown) including the controller 70 and the timer 71.

Thus, when the power is supplied by the auxiliary power supply 75, the rotation sensing part 40 cannot detect the rotation position because the rotation sensing part 40 does not receive the power. Information of the last rotation position, which is detected by the rotation sensing part 40 during the bread making by means of the primary power supply 73, remains in the memory of the controller 70.

The controller 70 displays the end of the bread making process, and simultaneously controls the motor 26 to rotate the kneading drums 11 and 13 so that the mixing bag can be removed from a holder of the lower kneading drums 13, on the basis of the rotation position detected by the rotation sensing part 40.

The controller 70 may control the motor 26 to rotate the upper and lower kneading drums 11 and 13 in a reverse direction relative to a rotation direction described above so that the mixing bag can be unwound from the upper kneading drum 11.

The controller 70 controls a rotation angle and rotation times of the upper and lower kneading drums 11 and 13 through the first and the second disk sensor 63 and 65.

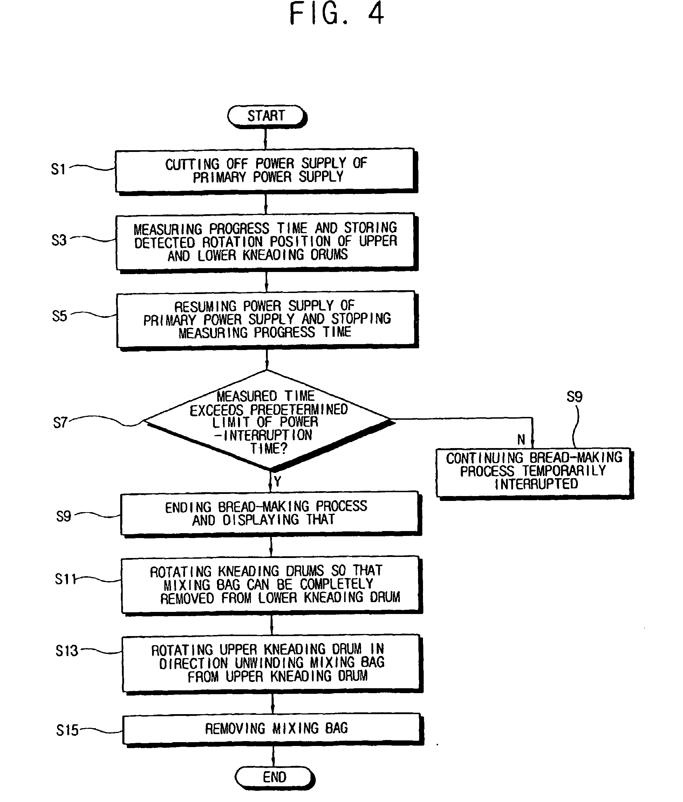

FIG. 4 is a control flowchart of the bread maker according to an embodiment of the present invention. As shown in FIG. 4, if power supply from the primary power supply 73 is cut off owing to the power interruption (100), the timer 71 receives power from the auxiliary power supply 75 and measures the progress time, and detected rotation positions of the upper and lower kneading drums 11 and 13 is stored (300). The measuring of the progress time by the timer 71 is continued until power is supplied again by the primary power supply 73.

If the supplying power by the primary power supply 73 is resumed (500), the controller 70 determines whether the measured time exceeds the predetermined limit of the power-interruption time (700).

When the measured time is within the predetermined limit of the power-interruption time, the controller 70 continues the bread-making process temporarily interrupted, which is stored in the memory thereof, on the basis of a bar code attached to the mixing bag (900).

When the measured time exceeds the predetermined limit of the power-interruption time, the controller 70 removes the bread-making process temporarily interrupted from the memory thereof and ends the bread-making process in progress. Herein, there can be displayed in the displayer 5a that the bread-making process is ended because the measured time exceeds the predetermined limit of the power-interruption time (1100).

To easily remove the wound mixing bag 7, first, at least one of the rotation positions of the pair of kneading drums, which is detected the primary power is cut off and stored in the memory of the controller 70, is read, and then the kneading drums rotate so that the mixing bag 7 can be completely removed from the lower kneading drum 13 (1300).

For example, when power interruption occurs in a state in which the mixing bag 7 is attached and wound on the upper kneading drum 11 three turns, that is, in a state in which the mixing bag 7 is wound to the utmost in the upper kneading drum 11 during a kneading process, the mixing bag 7 is controlled to be removed from the lower kneading drum 13 by rotating the upper kneading drum 11 halfway through 1 more turn in a winding direction of the mixing bag 7 on the upper kneading drum 11. Herein, measuring from the upper kneading drum 11 can be performed without respect to whether the mixing bag 7 is wound in the lower kneading drum 13.

Also, when power interruption occurs during the kneading process, the kneading drums 11 and 13 rotate to a state that the mixing bag 7 is wound into the upper kneading drum 11 to the utmost during the kneading process on the basis of the detected rotation position, and then the mixing bag 7 is controlled to be removed from the lower kneading drum 13 by rotating the upper kneading drum 11 halfway through 1 more turn in a winding direction of the mixing bag 7 on the upper kneading drum 11.

Further, after the kneading process is completed, a vacant mixing bag 7 is removed from the upper mixing drum 11 and completely wound on the lower kneading drum 13, the vacant mixing bag 7 unwinds by rotating the lower kneading drum 13 so that the vacant mixing bag 7 can be removed from the lower kneading drum 13.

When power supply is cut off while the mixing bag 7 is being wound on the lower kneading drum 13 so that the raw material completely kneaded is discharged to the baking tray 15, the mixing bag 7 may not unwind from the lower kneading drum 13 until the mixing bag 7 is completely wound in advance on the lower kneading drum 13.

When the mixing bag 7 is removed from the lower kneading drum 13, the upper kneading drum 11 rotates in a direction unwinding the mixing bag from the upper kneading drum 11 (1500).

Herein, the upper kneading drum 11 is controlled to rotate to a position in which the mixing bag 7 is held first, so that a user can easily remove the mixing bag 7 from the upper kneading drum 11.

With the above configuration, when power supply is resumed after the power-interruption time excessively passes, the bread making process is ended, the mixing bag 7 is removed from the lower kneading drum 11 and then the upper kneading drum 13 rotates in a direction unwinding the mixing bag 7, so that a user can easily remove the mixing bag 7, which is held onto the upper and the lower drums 11 and 13, therefrom.

As described above, according to preferred embodiments of the present invention, provided is a bread maker, in which when power supply is resumed after the power-interruption time excessively passes, the bread making process is ended, the mixing bag 7 is removed from the lower kneading drum 11 and then the upper kneading drum 13 rotates in a direction unwinding the mixing bag 7, so that a user can easily remove the mixing bag 7, which is held onto the upper and the lower drums 11 and 13, therefrom.

Although a few embodiments of the present invention have been shown and described, it will be appreciated by those skilled in the art that changes may be made in these embodiments without departing from the principles of the invention, the scope of which is defined in the appended claims.

## Claims

1. A bread maker to perform a bread making process, comprising:
a main body (1) forming an oven compartment (10);
upper and lower kneading drums (11, 13) spaced apart from each other inside the oven compartment (10), each kneading drum (11, 13) having a holding part (12) for holding opposite ends of a mixing bag (7) filled with dough;
a drum driving part (25) rotating the kneading drums (11,13) in clockwise and counterclockwise directions to knead the dough contained in the mixing bag (7); **characterized by**:
an auxiliary power supply (75) to supply power when a power supply of a primary power supply (73) is cut off; and
a controller (70) which receives power from the auxiliary power supply (75), and is suitable to measure a time interval from interruption to resumption of the power supply, determine whether the measured time exceeds a predetermined limit of power-interruption time, and end the bread making process when the measured time exceeds the predetermined limit of power-interruption time.

2. The bread maker according to claim 1, further comprising a rotation sensing part (40) sensing rotation position of the kneading drums (11, 13), wherein the controller (70), is suitable to control the drum driving part (25) to be rotated so that the mixing bag (7) is removed from the holding part of the lower kneading drum (13) on the basis of the rotation position detected by the rotation sensing part (40) when the measured time exceeds the predetermined limit of power-interruption time.

3. The bread maker according to claim 2, wherein the controller (70) is suitable to control rotation times of the kneading drums (11, 13) on the basis of the rotation position sensed by the rotation sensing part (40).

4. The bread maker according to claim 3, wherein the controller (70) is suitable to control the drum driving part (25) so that the upper kneading drum (11) is rotated opposite to a wound direction of the mixing bag (7) on the upper kneading drum (11) after the mixing bag (7) is removed from the lower kneading drum (13).

5. The bread maker according to claim 4, wherein the controller (70) is suitable to control the rotation times of the kneading drums (11, 13) so that the upper kneading drum (11) is rotated to a position in which the mixing bag (7) was first held.

6. The bread maker according to any preceding claim, further comprising a displayer (5a), which displays that the bread-making process is ended because the measured time exceeds the predetermined limit of the power-interruption time.

7. The bread maker according to claim 2, wherein the controller (70) is suitable to control an interrupted bread making process to be continued when the measured time is within the predetermined limit of the power-interruption time.

8. The bread maker according to claim 1, further comprising a control panel (5) having a displayer (5a) to display information.

9. The bread maker according to claim 1 or claim 8, wherein the upper and lower kneading drums (11, 13) are parallel to each other and reciprocally rotate.

10. The bread maker according to claim 9, wherein the bread maker is to perform a bread making process on a mixing bag (7) filled with dough, and wherein opposite ends of the mixing bag (7) are attached and wound to the kneading drums (11, 13).

11. The bread maker according to claim 1, further comprising a baking tray (15), in a lower part of the oven compartment (10), including first and second trays (15a, 15b) having L-shaped cross sections which are symmetrical to one another and which combine to form a box having a top opening.

12. The bread maker according to claim 11, further comprising a squeezing member (17) between the upper kneading drum (11) and the baking tray (15), to prevent dough in the mixing bag (7) from moving beyond the baking tray (15).

13. The bread maker according to claim 1, further comprising a heater (19) to heat the interior of the oven compartment (10).

14. The bread maker according to claim 1, further comprising:
an electric component compartment (20), having a first component compartment (21) including the driving part (25) ; and
a second component compartment (23) including a bar code scanner (29) to read a bar code (9) on the mixing bag (7).

15. The bread maker according to claim 14, wherein the driving part (25) further compromises:
an upper kneading drum rotation shaft (28); and
a belt (27) to transmit a rotary movement from the lower kneading drum (13) to the upper kneading drum rotation shaft (28), wherein the drum driving part (25) rotates a motor (26) to rotate the rotation shaft of the lower kneading drum (13).

16. The bread maker according to claim 14 or claim 15, wherein the bar code scanner (29) is suitable to move toward and distantly from an outer circumference of the upper kneading drum (11).

17. The bread maker according to any one of claims 14 to16, further comprising:
a rotation sensing part (40) to detect a rotation position signal of the upper kneading drum (11); and
a timer (71) to measure a time interval during which the primary power supply (73) is interrupted.

18. The bread maker according to claim 17, wherein the controller (70) is suitable to control the drum driving part (25) to rotate the lower kneading drum (13) on the basis of a rotation position signal detected by the rotation sensing part (40) and is suitable to end the bread making process when the time interval measured by the timer (71) exceeds a predetermined limit of power interruption time.

19. The bread maker according to claim 18, wherein the rotation sensing part (40) comprises:
a disk part (41) attached to at least one of the rotation shafts (28) to rotate with the upper kneading drum (11); and
a rotation sensor (61) near the disk part (41) to output a pulse signal by sensing the rotation of the upper kneading drum (11).

20. The bread maker according to claim 19, wherein the disk part (41) includes a first disk (36) having one detecting projection to sense one revolution of the upper kneading drum (11), and a second disk (37) having twenty-four detecting projections to sense less than one rotation of the upper rotation shaft (28); and
the rotation sensor (61) includes a first disk sensor (63) to sense the projection of the first disk (36) and to output one pulse signal per revolution of the upper kneading drum (11), and a second disk sensor (65) to sense the twenty-four projections of the second disk (37) and outputting twenty-four pulse signals per revolution of the upper kneading drum (11) .

21. The bread maker according to claim 20, wherein the pulse signals from the first and second disk sensors (63, 65) are transmitted to the controller (70) which is suitable to detect the rotation position of the upper kneading drum (11).

22. The bread maker according to claim 21, wherein, at an end of the bread making process, the controller (70) is suitable to control the motor (26) to rotate the upper and lower kneading drums (11, 13).

23. The bread maker according to claim 1, wherein the controller (70) is coupled to a timer (71) measuring the time interval.

24. The bread maker according to claim 1, wherein the predetermined limit of power interruption time is a maximum time in which the bread making process is not adversely affected by the interruption of the primary power supply (73).

25. The bread maker according to claim 24, wherein a default value for the predetermined limit of power interruption time is 15 minutes.

26. The bread maker according to claim 25, wherein the controller (70) is suitable to continue the bread making process when the measured time is less than the predetermined limit of power interruption time.

27. A method of controlling a bread maker during a bread making process, comprising:
detecting a rotation position of a kneading drum (11, 13):
determining whether a measured time exceeds a predetermined limit of power-interruption time by measuring a time from an interruption of a primary power supply (73) to a resumption of the primary power supply (73),
ending the bread making process when the measured time exceeds the predetermined limit of power-interruption time; and
rotating the kneading drum (11, 13) on the basis of a detected rotation position of the kneading drum (11, 13) if the bread making process is ended.

28. The method according to claim 27, further comprising displaying that the bread making process is ended.

29. The method according to claim 27 or claim28, further comprising continuing an interrupted bread making process when the measured time is within the predetermined limit of the power-interruption time.

30. The method of claim 27, wherein the bread maker comprises an oven compartment (10), a pair of kneading drums (11, 13) spaced apart from each other inside the oven compartment (10) with each kneading drum (11, 13) having a holding part (12) holding opposite ends of a mixing bag (7) filled with dough, and a drum driving part (25) rotating the kneading drums (11, 13) to knead the dough contained in the mixing bag (7).

31. The method according to claim 30, further comprising rotating the upper kneading drum (11) opposite to a wound direction of the mixing bag (7) on the upper kneading drum (11) after the mixing bag (7) is removed from the lower kneading drum (13).

32. The method according to claim 30 or claim 31, wherein the rotating the upper kneading drum (11) comprises controlling rotation times of the kneading drums (11, 13) so that the upper kneading drum (11) is rotated to a position in which the mixing bag (7) was first held.

33. The method according to any one of claims30-32, further comprising displaying that the bread making process is ended because the measured time exceeds the predetermined limit of the power-interruption time.

34. The method according to claim 30, further comprising continuing an interrupted bread making process when the measured time is within the predetermined limit of the power-interruption time.

## Patentansprüche

1. Brotbackmaschine zum Durchführen eines Brotbackprozesses, die umfasst:
einen Hauptkörper (1), der eine Ofenkammer (10) bildet;
eine obere und eine untere Knetwalze (11, 13), die voneinander Im Inneren der Ofenkammer (10) beabstandet sind, wobei jede Knetwalze (11, 13) einen Halteteil (12) zum Hatten einander gegenüberllegender Enden eines Mischbeutels (7) het, der mit Teig gefüllt ist;
einen Walzenantriebatell (25), der die Knetwalzen (11, 13) im Uhrzeigerelnn und entgegen dem Uhrzelgersinn dreht, um den in dem Mischbeutel (7) enthaltenen Teig zu kneten: **gekennzeichnet durch:**
eine Zusatz-Stromzufuhr (75), die Strom zuführt, wenn eine Stromzufuhr einer primären stromzufuhr (73) unterbrochen ist: und
eine Steuereinrichtung (70), die Strom von der Zusetzstromzuführ (75) empfängt und sich dazu eignet, ein Zeltintervall von der Unterbrechung bis zur Wiederherstellung der Stromzufuhr zu messen, zu bestimmen, ob die gemassens Zeit eine vorgegebene Grenze der Stromunterbrechungezeit überschreltet, und den Brotbackprozess zu beenden, wenn die gemessene Zeit die vorgegebene Grenze der Stromunterbrechungszeit überschreitet.

2. Brötbackmaschine nach Anspruch 1, die das Weiteren einen Dreherfassungsteil (40) umfasst, der Drehposition der Knetwatzen (11, 13) erfasst, wobei sich die Steuereinrichtung (70) dazu eignet, den Walzenantriebstell (25) auf Basis der durch den Dreherfassungsteil (40) erfessten Drehposition so zu steuern, dass er gedreht wird, so dass der Mischbeutel (7) von dem Halteteil der unteren Knetwalze (13) entfernt wird, wenn die gemessene Zeit die vorgegebene Grenze der Stromunterbrechungszeit überschreitet.

3. Brotbackmaschine nach Anspruch 2, wobei sich die Steuereinrichtung (70) dezu eignet, Drehzeiten der Knetwalzen (11, 13) auf Basis der durch den Dreherfassungsteil (40) erfassten Drehposition zu steuern.

4. Brothackmaschine nach Anspruch 3, wobei sich die Steuereinrichtung (70) dazu eignet, den Trommelentriebsteil (25) so zu steuern, dass die obere Knetwalze (11) entgegengesetzt zu einer Aufwickelrtchtung des Mischbeutels (7) auf die obere Knetwalze (11) gedreht wird, nachdem der Mischbeutel (7) von der unteren Knetwalze (13) entfernt ist.

5. Brotbackmaschine nach Anspruch 4, wobei sich die Steuereinrichtung (70) dazu eignet, die Drehzeiten der Knetwalzen (11,13) so zu eteuern, dass die obere Knetwalze (11) an eine Position gedreht wird, an der der Mischbeutel (7) zuerst gehalten wurde.

6. Brotbackmaschine nach einem der vorangehenden Ansprüche, die des Welteren eine Anzeige (5a) umfasst, die anzelgt, dass der Brotbackprozess beendel wird, da die gemessene Zelt die vorgegebene Grenze der Stromunterbrechungszeit überschreitet.

7. Brotbackmaschine nach Anspruch 2, wobei die Steuereinrichtung (70) einen unterbrochenen Brotbackprozess so steurert, dass er fortgesetzt wird, wenn die gemessene Zeit innerhalb der vorgegebenen Grenze der Stromunterbrachungszeit liegt.

8. Brotbackmaschine nach Anspruch 1, die des Weiteren ein Bedlenfeld (5) umfasst, das eine Anzeige (5a) zum Anzeigen von Informationen het.

9. Brotbackmaschine nach Anspruch 1 oder Anspruch 8, wobei die obere und die untere Knetwalze (11, 13) parallel zueinander sind und sich hin und her drehen.

10. Brotbackmaschine nach Anspruch 9, wobei die Brotbackmachine dazu dient, einen Brotbackvorgang en einem Mischbeutel (7) durchzuführen, der mit Teig gefüllt ist, und wobei einander gegenüberfiegende Enden des Mishbeutels (7) an den Knetwalzen (11, 13) engebracht und auf sie gewickelt sind.

11. Brotbackmaschine nach Anspruch 1, die des weiteren ein Backfach (15) in einem unteren Teil der Ofenkammer (10) umfasst, das ein erates und ein zweites Fach (15a, 15b) mit L-förmigen Querschnitt enthält, die symmetrisch zueinander sind und die zusammen einen Kasten mit einer oberen Öffnung bilden.

12. Brotbackmaschine nach Anspruch 11, die des Weiteren ein Quetschelement (17) zwischen der oberen Knetwalze und dem Backfach (15) umfasst, um zu verbindem, dass sich Teig in dem Mischbeutel (7) über das Backfach (15) hinaus bewegt.

13. Brotbackmaschine nach Anspruch 1, die des Weiteren eine Heizeinrichtung (10) zum Heizen des Innenraums der Ofenkammer (10) umfasst.

14. Brotbackmaschine nach Anspruch 1, die des Weiteren umfasst:
eine Kammer (20) für elektrische Bauteile, die eine erste Beuteilkammer (21) aufweist, die den Antriebsteil (25) enthält; und
eine zweite Bautellkammer (23), die einen Strichcodescanner (29) zum Lesen eines Strichcodes (9) auf dem Mischbeutel (7) enthalt.

15. Brotbackmaschine nach Anspruch 14, wobei der Antriebsteil (25) des Weiteren umfasst:
eine obere Knetwelzen-Drehwelle (28): und
einen Riemen (27), der eine Drehbewegung von der unteren Knetweize (13) auf die obere Knetwalzen-Drehwelle (28) überträgt, wobei der Walzenantriebsteil (25) einen Motor (26) dreht, um die Drehwelle der unteren Knetwalze (13) zu drehen.

16. Brotbackmaschine nach Anspruch 14 oder Anspruch 15, wobei sich der Strichcodescanner (29) dazu eignet, sich auf einen Außenumfang der oberen Knetwalze (11) zu und von ihm weg zu bewegen.

17. Brotbackmaschine nach einem der Ansprüche 14 bis 16, die des Weiteren umfasst:
einen Drehertassungstell (40), der ein Drehpositionssignal der oberen Knetwalze (11) erfasst; und
eine Zeitsleuerung (71) zum Messen eines Zeitintervalls, in dem die Primär-Strömzufuhr (73) unterbrochen Ist.

18. Brotbackmaschine nach Anspruch 17, wobei sich die Steuereinrichtung (70) dazu eignet, den Trommelantriebstell (25) auf Basis eines Drehpositionssignals, des durch den Dreherfassungstell (40) erfasst wird, so zu steuern, dass er die untere Knetwalze (13) dreht, und sich dazu eignet, den Backprozess zu beenden, wenn das durch die Zeitsteuerung (71) gemessene Zeltintervall eine vergebene Grenze der Stromunterbrechungszeit überschreitet.

19. Brotbackmaschine nach Anspruch 18, wobei der Dreherfassungeteil (40) umfasst:
einen Schelbenteil (41), der an wenigstens einer der Drehwellen (28) angebracht ist, um sich mit der oberen Knetwalze (11) zu drehen; und
einen Drehsensor (61) in der Nähe des Scheibenteils (41) zum Ausgeben eines Impulssignals durch Erfassen der Drehung der oberen Knetwalze (11).

20. Brotbackmaschine nach Anspruch 19, wobei der Scheibentell (41) eine erste Scheibe (36), die einen Erfassungsvorsprung zum Erfassen der Umdrehung der oberen Knetwalze (11) hat, und eine zweite Scheibe (37) enthalt, die vierundzwanzig Erfassungsvorsprünge hat, um weniger ein eine Umdrehung der oberen Drehwelle (28) zu erfassen; und der Drehsensor (61) einen ersten Schelbensensor (83), der den Vorsprung der ersten Scheibe (36) erfasst und ein Impulssignal pro Umdrehung der oberen Knetwatze (11) ausgibt, und einen zwelten Scheibensensor (85) enthält, der die vierundzwanzig Vorsprünge der zweiten Scheibe (37) erfasst und vierundzwanzig Impulssignale pro Umdrehung der oberen Knetwalze (11) ausgibt.

21. Brotbackmaschine nach Anspruch 20, wobei die Impulsignale von dem ersten und dem zweiten Scheibensensor (83, 85) zu der Steuereinrichtung (70) Obertragen werden, die sich dazu eignet, die Drehposition der oberen Knetwalze (11) zu erfassen.

22. Brotbackmaschine nach Anspruch 21, wobei an einem Ende des Brotbackprozesses die Steuereinrichtung (70) den Motor (26) so steuert dass er die obere und die untere Knetwalze (11,13) dreht.

23. Brotbackmaschine nach Anspruch 1, wobei die Steuerung (70) mit einer Zeitsteuerung (71) gekoppelt ist, die das Zeltintervall misst.

24. Brotbackmaschine nach Anspruch 1, wobei die vorgegebene Grenze der Stromunterbrechungselt eine maximale Zeit ist, während der der Brotbackprozesss durch die Unterbrechung der Primär-Stromzufuhr (73) nicht nachtellig besinflusst wird.

25. Brotbackmaschine nach Anspruch 24, wobei ein Standardwert für die vorgegebene Grenze der Stromunterbrechungszeit 15 Minuten ist.

26. Brotbackmaschine nach Anspruch 25, wobei sich die Steuereinrichtung (70) dazu eignet, den Brotbackprozess fortzusetzen, wenn die gemessene Zeit kürzer ist als die vorgegebene Grenze der Stromunterbrechungszeit.

27. Verfahren zum Steuern einer Brotbackmaschine während eines Brotbackprozesses, das umfasst:
Erfassen einer Drehposition einer Knetwalze (11, 13);
Feststellen, ob eine gemessene Zeit eine vorgegebene Grenze der Stromunterbrechungszeit überschreitet, indem eine Zeit von einer Unterbreching einer Primär-Stromzufuhr (73) bis zu einer Wiederaufnahme der Primär-Stromzufuhr (73) gemessen wird,
Beenden des Brotbackprozesses, wenn die gemessens Zeit die vorgegebene Grenze der Stromunterbrechungszeit überschreitet; und
Drehen der Knetwalze (11,13) auf der Basis einer erfassten Drehposition der Knetwalze (11, 13), wenn der Brotbackprozess beendet ist.

28. Verfahren nach Anspruch 27, das des Welteren umfasst, dass angezeigt wird, dass der Brotbackprozess beendet ist.

29. Verfahren nach Anspruch 27 oder Anspruch 28, das des Weiteren umfasst, dass ein unterbrochener Brotbackprozess fortgesetzt wird, wenn die gemassene Zeit Innerhalb der vorgegebenen Grenze der Stromunterbrechungszeit liegt.

30. Verfahren nach Anspruch 27, wobei die Brolbackmaschine eine Ofenkammer (10), ein Paar Knetwalzen (11, 13), die voneinander im Inneren der Ofenkammer (10) beabstandet sind, wobei jede Knetwalze (11, 13) einen Haltetell (12) zum Halten einender gegenüberliegende Enden eines Mischbeutels (7) hat, der mit Teig gefüllt ist, und einen Walzenantriebstell (25) umfasst, der die Knetwalzen (11, 13) dreht, um den in dem Mischbeutel (7) enthaltenen Teig zu kneten.

31. Verfahren nach Anspruch 30, das des Weiteren das Drehen der oberen Knetwalze (11) entgegengesetzt zu einer Aufwickelrichung des Mischbeutels (7) auf die obere Knetwatze (11) umfasst, nachdem der Mischbeutel (7) von der unteren Knetwalze (13) entfernt ist.

32. Verfahren nach Anspruch 30 oder Anspruch 31, wobei das Drehen der oberen Knetwalze (11) das Steuern von Drehzeiten der Knetwalzen (11, 13) umfasst, so dass die obere Knetwalze (11) an eine Position gedreht wird, an der der Mischbeutel (7) zuerst gehalten wurde.

33. Verfahren nach einem der Ansprüche 30-32, das des Welteren umfasst, dass angezeigt wird, dass der Brotbackprozess beendel wird, da die gemessene Zeit die vorgegebene Grenze der Stomunterbrechungezeit übershreitet.

34. Verfahren nach Anspruch 30, das des Weiteren umfasst, dass ein unterbrochener Brotbackprozess fortgesetzt wird, wenn die gemessene Zeit innerhalb der vorgegebenen Grenze der Stromunterbrechungzelt liegt.

## Revendications

1. Machine à faire du pain permettant de réaliser un processus de fabrication de pain, et comprenant :
- un corps principal (1) formant un compartiment four (10) ;
- des tambours de malaxage supérieur et inférieur (11, 13) espacés l'un de l'autre à l'intérieur du compartiment four (10), chaque tambour de malaxage (11, 13) comportant une partie de maintien (12) permettant de maintenir les extrémités opposées d'un sac de mélange (7) rempli de pâte ;
- une partie d'entraînement de tambour (25) faisant tourner les tambours de malaxage (11, 13) dans le sens des aiguilles d'une montre et dans le sens inverse des aiguilles d'une montre afin de malaxer la pâte contenue dans le sac de mélange (7) ;
**caractérisé par** :
- une alimentation électrique auxiliaire (75) fournissant de l'électricité lorsque l'alimentation en électricité d'une alimentation électrique primaire (73) est coupée ; et par
- une unité de commande (70) qui reçoit de l'électricité de l'alimentation électrique auxiliaire (75) et qui permet de mesurer un intervalle de temps entre l'interruption et la reprise de l'alimentation électrique, de déterminer si le temps mesuré dépasse une limite prédéterminée de temps d'interruption d'alimentation électrique, et de mettre un terme au processus de fabrication de pain lorsque le temps mesuré dépasse la limite prédéterminée de temps d'interruption d'alimentation électrique.

2. Machine à faire du pain selon la revendication 1, comprenant en outre une partie de détection de rotation (40) détectant la position de rotation des tambours de malaxage (11, 13), et dans laquelle l'unité de commande (70) permet de commander la partie d'entraînement de tambour (25) devant entrer en rotation de sorte que le sac de mélange (7) est retiré de la partie de maintien du tambour de malaxage inférieur (13) en fonction de la position de rotation détectée par la partie de détection de rotation (40) lorsque le temps mesuré dépasse la limite prédéterminée de temps d'interruption d'alimentation électrique.

3. Machine à faire du pain selon la revendication 2, dans laquelle l'unité de commande (70) permet de commander les temps de rotation des tambours de malaxage (11, 13) en fonction de la position de rotation détectée par la partie de détection de rotation (40).

4. Machine à faire du pain selon la revendication 3, dans laquelle l'unité de commande (70) permet de commander la partie d'entraînement de tambour (25) de sorte que le tambour de malaxage supérieur (11) tourne dans le sens inverse au sens d'enroulement du sac de mélange (7) sur le tambour de malaxage supérieur (11) une fois le sac de mélange (7) retiré du tambour de malaxage inférieur (13).

5. Machine à faire du pain selon la revendication 4, dans laquelle l'unité de commande (70) permet de commander les temps de rotation des tambours de malaxage (11, 13) de sorte que le tambour de malaxage supérieur (11) tourne jusque dans une position dans laquelle le sac de mélange (7) était initialement maintenu.

6. Machine à faire du pain selon l'une quelconque des revendications précédentes, comprenant en outre une unité d'affichage (5a) qui affiche que le processus de fabrication de pain a pris fin parce que le temps mesuré dépasse la limite prédéterminée de temps d'interruption d'alimentation électrique.

7. Machine à faire du pain selon la revendication 2, dans laquelle l'unité de commande (70) permet de commander qu'un processus de fabrication de pain interrompu soit poursuivi lorsque le temps mesuré se situe dans la limite prédéterminée du temps d'interruption d'alimentation électrique.

8. Machine à faire du pain selon la revendication 1, comprenant en outre un panneau de commande (5) comportant une unité d'affichage (5a) pour afficher des informations.

9. Machine à faire du pain selon la revendication 1 ou la revendication 8, dans laquelle les tambours de malaxage supérieur et inférieur (11, 13) sont parallèles l'un à l'autre et tournent l'un par rapport à l'autre.

10. Machine à faire du pain selon la revendication 9, dans laquelle la machine à faire du pain effectue un processus de fabrication de pain à l'aide d'un sac de mélange (7) rempli de pâte, et dans laquelle les extrémités opposées du sac de mélange (7) sont fixées aux tambours de malaxage (11, 13) et enroulées sur les tambours de malaxage (11, 13).

11. Machine à faire du pain selon la revendication 1, comprenant en outre un plateau de cuisson (15), dans la partie inférieure du compartiment four (10), comprenant un premier et un second plateaux (15a, 15b) ayant des sections transversales en forme de L qui sont symétriques l'une par rapport à l'autre et qui se combinent de manière à former une boîte possédant une ouverture supérieure.

12. Machine à faire du pain selon la revendication 11, comprenant en outre un élément d'écrasement (17) entre le tambour de malaxage supérieur (11) et le plateau de cuisson (15) , afin d'empêcher que la pâte dans le sac de mélange (7) ne se déplace au-delà du plateau de Cuisson (15).

13. Machine à faire du pain selon la revendication 1, comprenant en outre une unité de chauffage (19) qui chauffe l'intérieur du compartiment four (10) .

14. Machine à faire du pain selon la revendication 1, comprenant en autre :
- un compartiment pour composants électriques (20) comprenant un premier compartiment pour composants (21) comportant la partie d'entraînement (25) ; et
- un second compartiment pour composants (23) comportant un lecteur de codes à barres (29) permettant de lire le code à barres (9) sur le sac de mélange (7).

15. Machine à faire du pain selon la revendication 14, dans laquelle la partie d'entraînement (25) comprend en outre :
- un arbre de rotation (28) du tambour de malaxage supérieur ; et
- une courroie (27) servant à transmettre le mouvement de rotation depuis le tambour de malaxage inférieur (13) jusqu'à l'arbre de rotation (28) du tambour de malaxage supérieur, dans laquelle la partie d'entraînement de tambour (25) fait tourner un moteur (26) afin de faire tourner l'arbre de rotation du tambour de malaxage inférieur (13).

16. Machine à faire du pain selon la revendication 14 ou la revendication 15, dans laquelle le lecteur de codes à barres (29) peut se rapprocher et s'éloigner de la circonférence externe du tambour de malaxage supérieur (11).

17. Machine à faire du pain selon l'une quelconque des revendications 14 à 16, comprenant en outre :
- une partie de détection de rotation (40) permettant de détecter un signal de position de rotation du tambour de malaxage supérieur (11) ; et
- un minuteur (71) permettant de mesurer l'intervalle de temps durant lequel l'alimentation électrique primaire (73) est interrompue.

18. Machine à faire du pain selon la revendication 17, dans laquelle l'unité de commande (70) permet de commander la partie d'entraînement de tambour (25) de manière à faire tourner le tambour de malaxage inférieur (13) en fonction d'un signal de position de rotation détecté par la partie de détection de rotation (40), et de mettre un terme au processus de fabrication de pain lorsque l'intervalle de temps mesuré par le minuteur (71) dépasse une limite prédéterminée de temps d'interruption d'alimentation électrique.

19. Machine à faire du pain selon la revendication 18, dans laquelle la partie de détection de rotation (40) comprend :
- une partie disque (41) fixée à au moins un des arbres de rotation (28) de manière à tourner avec le tambour de malaxage supérieur (11) ; et
- un capteur de rotation (61) à proximité de la partie disque (41) qui va émettre un signal de type impulsion en détectant la rotation du tambour de malaxage supérieur (11) .

20. Machine à faire du pain selon la revendication 19, dans laquelle la partie disque (41) comprend un premier disque (36) possédant une protubérance de détection permettant de détecter une révolution du tambour de malaxage supérieur (11), et un second disque (37) possédant vingt-quatre protubérances de détection permettant de détecter moins d'une révolution de l'arbre de rotation supérieur (28), et le capteur de rotation (61) comprend un premier capteur de disque (63) qui va détecter la protubérance du premier disque (36) et émettre un signal de type impulsion par révolution du tambour de malaxage supérieur (11), et un second capteur de disque (65) qui va détecter les vingt-quatre protubérances du second disque (37) et émettre vingt-quatre signaux de type impulsions par révolution du tambour de malaxage supérieur (11).

21. Machine à faire du pain selon la revendication 20, dans laquelle les signaux de type impulsions provenant du premier et du second capteurs de disque (63, 65) sont transmis à l'unité de commande (70) qui va pouvoir détecter la position de rotation du tambour de malaxage supérieur (11).

22. Machine à faire du pain selon la revendication 21, dans laquelle, à la fin du processus de fabrication de pain, l'unité de commande (70) commande au moteur (26) de faire tourner les tambours de malaxage supérieur et inférieur (11, 13).

23. Machine à faire du pain selon la revendication 1, dans laquelle l'unité de commande (70) est couplée à un minuteur (71) mesurant l'intervalle de temps.

24. Machine à faire du pain selon la revendication 1, dans laquelle la limite prédéterminée d'interruption d'alimentation électrique est un temps maximal pendant lequel le processus de fabrication du pain n'est pas affecté de façon adverse par l'interruption de l'alimentation électrique primaire (73).

25. Machine à faire du pain selon la revendication 24, dans laquelle la valeur par défaut de la limite prédéterminée du temps d'interruption de l'alimentation électrique est de 15 minutes.

26. Machine à faire du pain selon la revendication 25, dans laquelle l'unité de commande (70) permet de poursuivre le processus de fabrication du pain lorsque le temps mesuré est inférieur à la limite prédéterminée de temps d'interruption de l'alimentation électrique.

27. Procédé de commande d'une machine à faire du pain pendant un processus de fabrication de pain, consistant à :
- détecter une position de rotation d'un tambour de malaxage (11, 13) ;
- déterminer si un temps mesuré dépasse une limite prédéterminée de temps d'interruption de l'alimentation électrique en mesurant le temps entre l'interruption de l'alimentation électrique primaire (73) et la reprise de l'alimentation électrique primaire (73) ;
- mettre fin au processus de fabrication du pain lorsque le temps mesuré dépasse la limite prédéterminée de temps d'interruption de l'alimentation électrique ; et
- faire tourner le tambour de malaxage (11, 13) en fonction d'une position de rotation détectée du tambour de malaxage (11, 13) si le processus de fabrication du pain prend fin.

28. Procédé selon la revendication 27, consistant en outre à afficher que le processus de fabrication du pain a pris fin.

29. Procédé selon la revendication 27 ou la revendication 28, consistant en outre à poursuivre un processus de fabrication du pain interrompu lorsque le temps mesuré se situe dans la limite prédéterminée de temps d'interruption de l'alimentation électrique.

30. Procédé selon la revendication 27, dans lequel la machine à faire du pain comprend un compartiment four (10), deux tambours de malaxage (11, 13) espacés l'un de l'autre à l'intérieur du compartiment four (10), chaque tambour de malaxage (11, 13) comportant une partie de maintien (12) permettant de maintenir les extrémités opposées d'un sac de mélange (7) rempli de pâte, et une partie d'entraînement de tambour (25) faisant tourner les tambours de malaxage (11, 13) afin de malaxer la pâte contenue dans le sac de mélange (7) .

31. Procédé selon la revendication 30, consistant en outre à faire tourner le tambour de malaxage supérieur (11) dans le sens inverse au sens d'enroulement du sac de mélange (7) sur le tambour de malaxage supérieur (11) une fois le sac de mélange (7) retiré du tambour de malaxage inférieur (13).

32. Procédé selon la revendication 30 ou la revendication 31, dans lequel la rotation du tambour de malaxage supérieur (11) consiste à commander les tempe de rotation des tambours de malaxage (11, 13) de sorte que le tambour de malaxage supérieur (11) tourne jusque dans une position dans laquelle le sac de mélange (7) était initialement maintenu.

33. Procédé selon l'une quelconque des revendications 30 à 32, consistant en outre à afficher que le processus de fabrication de pain a pris fin parce que le temps mesuré dépasse la limite prédéterminée de temps d'interruption d'alimentation électrique.

34. Procédé selon la revendication 30, consistant en outre à poursuivre un processus de fabrication du pain interrompu lorsque le temps mesuré se situe dans la limite prédéterminée de temps d'interruption de l'alimentation électrique.
